# EUROPÄISCHE PATENTSCHRIFT

(11) **EP 4 631 693 B1**
(45) Veröffentlichungstag und Bekanntmachung des Hinweises auf die Patenterteilung: **02.12.2026**
(21) Anmeldenummer: 25166204.5
(22) Anmeldetag: 26.03.2025
(51) Int. Cl.: B29C 44/34, B01D 53/02, B01D 53/62, C08J 9/12, B29K 105/04

(54) **VERFAHREN UND ANLAGE ZUR HERSTELLUNG VON GESCHÄUMTEN KUNSTSTOFFTEILEN**
METHOD AND INSTALLATION FOR PRODUCING FOAMED PLASTIC PARTS
PROCÉDÉ ET INSTALLATION DE FABRICATION DE PIÈCES EN MATIÈRE PLASTIQUE EXPANSÉE

(30) Priorität: 10.04.2024 DE 102024203283
(43) Veröffentlichungstag der Anmeldung: 15.10.2025
(73) Patentinhaber: Robert Bosch GmbH, 70442 Stuttgart (DE)
(72) Erfinder: Kugele, Daniel, 75382 Althengstett (DE); Wachendorfer, Ilonka, 73666 Baltmannsweiler (DE)

(56) Entgegenhaltungen:
- EP-A1- 4 458 541
- WO-A1-2020/212146
- WO-A1-2023/127914
- DE-A1- 10 227 039
- US-B2- 7 150 615

## Beschreibung

### Technisches Gebiet

Die Erfindung betrifft ein Verfahren zur Herstellung von geschäumten Kunststoffteilen unter Verwendung von Kohlendioxid zum Schäumen einer Kunststoffschmelze, das sich dadurch auszeichnet, dass das Kohlendioxid aus der Umgebungsluft bzw. Atmosphäre gewonnen wird und somit zur Reduktion des Kohlendioxidgehalts in der Atmosphäre beiträgt. Ferner betrifft die Erfindung eine Anlage, die vorzugsweise nach einem erfindungsgemäß ausgebildeten Verfahren arbeitet.

### Stand der Technik

Um die Erwärmung der Erdatmosphäre zu begrenzen ist es bereits bekannt, den durch die Industrialisierung gestiegenen CO₂-Gehalt aktiv zu reduzieren. Hierzu können sogenannte "Direct Air Capture"- Systeme (DAC) zum Einsatz kommen (Quelle: https://de.wikipedia.org/wiki/Direct_Air_Capture). Eine derartige Anlage zeichnet sich prinzipiell dadurch aus, dass in einer ersten Einrichtung das Kohlendioxid aus der Umgebungsluft durch ein Adsorptionsmaterial aufgenommen wird. In einer zweiten Einrichtung wird das Kohlendioxid aus dem mit dem Kohlendioxid angereicherten Adsorptionsmaterial dem Adsorptionsmaterial in einem Desorptionsvorgang wieder entzogen, sodass das Kohlendioxid im Anschluss daran dauerhaft, z.B. durch Verpressen in geologische Kavitäten, gebunden werden kann.

Aus der DE 11 2018 005 746 B4 ist es weiterhin bekannt, Kohlendioxid aus der Abluft von Industrieanlagen zu nutzen, um u.a. einen nanocellulosen Extrusionsschaum herzustellen.

Darüber hinaus ist es aus der EP 1 475 208 B1 sowie der EP 2 260 997 B1 bekannt, Kohlendioxid in eine Kunststoffschmelze einzuleiten. Dies geschieht im Bereich einer Schmelzplastifizierung. Dabei wird das Gas je nach Verfahren entweder direkt in den Plastifizierzylinder oder in die Düse des Plastifizierzylinders eingeleitet. Das Kohlendioxid löst sich dabei in der Kunststoffschmelze unter entsprechendem Druck und expandiert, sobald die Kunststoffschmelze in die Form gespritzt wird. Die Gasexpansion übernimmt bei volumetrischer Füllung die Funktion des Nachdrucks, sodass ein Kunststoffbauteil ohne Einfallstellen und mit geringem Verzug entsteht. Es entsteht somit ein Kunststoffbauteil mit kompakter Außenhaut und einem sogenannten microzellularen Schaum oder auch Schaum mit integraler Dichteverteilung (sogenannter Integralschaum).

Die DE 102 27 039 A1 offenbart ein Verfahren zur Herstellung kohlendioxidgetriebener PS-Schaumpartikel durch Extrudieren unter Einhaltung besonderer Rahmenbedingungen.

### Offenbarung der Erfindung

Das erfindungsgemäße Verfahren zur Herstellung von geschäumten Kunststoffteilen mit den Merkmalen des Anspruchs 1 hat den Vorteil, dass das in einer Anlage zur Reduktion von Kohlendioxid aus der Umgebungsluft gewonnene Kohlendioxid dazu genutzt wird, um daraus geschäumte Kunststoffteile herzustellen. Es erübrigt sich somit, das Kohlendioxid weiteren Behandlungsschritten auszusetzen, die dazu dienen, das Kohlendioxid beispielsweise endzulagern. Dadurch ergibt sich zum Beispiel eine Ersparnis von Energie sowie Investitionskosten für derartige Verfahren bzw. Anlagen. Vielmehr dienen die Kunststoffteile selbst dazu, das zur Erzeugung der Kunststoffteile erforderliche Kohlendioxid dauerhaft zu binden.

Vor dem Hintergrund der obigen Erläuterungen ist es daher bei einem erfindungsgemäßen Verfahren zur Herstellung von geschäumten Kunststoffteilen unter Verwendung von Kohlendioxid zum Schäumen einer Kunststoffschmelze durch Einleiten des Kohlendioxids in die Kunststoffschmelze im Bereich einer Plastifizierungseinheit mit den Merkmalen des Anspruchs 1 vorgesehen, dass das Kohlendioxid aus einer Vorrichtung zur Reduktion von Kohlendioxid aus der Umgebungsluft unter Verwendung eines Adsorptionsmaterials gewonnen und der Plastifizierungseinheit zugeführt wird.

Die Vorrichtung zur Reduktion von Kohlendioxid aus der Umgebungsluft ist insbesondere eine CO2-Abtrennungsvorrichtung, welche ausgebildet ist, Kohlendioxid aus der Umgebungsluft mittels eines CO2-Abtrennungsvorgangs (reversibel) abzutrennen.

Der Begriff "Abtrennen" umfasst im Rahmen der vorliegenden Erfindung jegliche sinnvolle Art der Abtrennung bzw. Abscheidung von CO2 (Kohlenstoffdioxid) aus der Luft, wobei eine Bindung und/oder Anhaftung und/oder Einlagerung und/oder Aufnahme von CO2-Molekülen an einem CO2-Abtrennungsmittel erfolgt.

Hierbei kann die CO2-Abtrennungsvorrichtung insbesondere ausgebildet sein, das CO2 aus einem zugeführten Luftstrom mittels eines CO2-Abtrennungsvorgangs abzutrennen, bei dem die Abtrennung unter Energieabgabe bzw. Wärmeabgabe an den Luftstrom erfolgt. Der CO2-Abtrennungsvorgang ist bevorzugt ein Sorptionsvorgang, insbesondere ein Adsorptionsvorgang und/oder ein Absorptionsvorgang. Demnach kann das Abtrennen des CO2 insbesondere mittels zumindest eines der folgenden Verfahren oder Mischformen daraus erfolgen:
- chemisches Adsorptionsverfahren
- physikalisches Adsorptionsverfahren
- chemisches Absorptionsverfahren
- physikalisches Absorptionsverfahren

Die CO2-Abtrennungsvorrichtung ist ferner zum Freisetzen von CO2 aus dem CO2-Abtrennungsmittel mittels eines CO2-Freisetzungsvorgangs ausgebildet. Der Begriff "Freisetzen" umfasst im Rahmen der vorliegenden Erfindung jegliche sinnvolle Art der Freisetzung bzw. Austreibung von CO2 (Kohlenstoffdioxid) aus dem CO2-Abtrennungsmittel, wobei eine Lösung und/oder Freisetzung und/oder Abgabe von CO2-Molekülen aus dem CO2-Abtrennungsmittel erfolgt.

Hierbei ist die CO2-Abtrennungsvorrichtung insbesondere ausgebildet, das CO2 aus dem CO2-Abtrennungsmittel mittels eines CO2-Freisetzungsvorgangs freizusetzen bzw. zu lösen, bei dem unter Energieeinbringung bzw. Wärmeeinbringung in das CO2-Abtrennungsmittel das CO2 von diesem freigesetzt wird.

Der CO2-Abtrennungsvorgang ist bevorzugt ein Desorptionsvorgang. Demnach kann das Freisetzen des CO2 insbesondere mittels zumindest eines der folgenden Verfahren oder Mischformen daraus erfolgen:
- chemisches Desorptionsverfahren
- physikalisches Desorptionsverfahren

Bevorzugt ist die CO2-Abtrennungsvorrichtung ausgebildet, den CO2-Abtrennungsvorgang und den CO2-Freisetzungsvorgang zyklisch durchzuführen. Hierbei ist die CO2-Abtrennungsvorrichtung insbesondere ausgebildet, den Sorptionsvorgang und den Desorptionsvorgang zyklisch durchzuführen. Die grundsätzliche Funktionsweise der CO2-Abtrennungsvorrichtung kann bspw. analog zu der eingangs erwähnten WO 2020/212146 A1erfolgen.

Vorteilhafte Weiterbildungen des erfindungsgemäßen Verfahrens zur Herstellung von geschäumten Kunststoffteilen sind in den Unteransprüchen aufgeführt.

Eine ganz besonders bevorzugte Weiterbildung des Verfahrens sieht vor, dass im Bereich einer Recyclinganlage von geschäumten Kunststoffteilen bei deren Zerkleinerung freigewordenes Kohlendioxid zum Herstellen neuer geschäumter Kunststoffteile verwendet wird. Mit anderen Worten gesagt bedeutet dies, dass ein geschlossener Kreislauf des Kohlendioxids ermöglicht wird, bei der das bei der Produktion der Kunststoffteile verwendete Kohlendioxid anschließend beim Recycling zurückgewonnen und zur Herstellung neuer Kunststoffteile verwendet werden kann.

Erfindunsgemäß wird das in der Recyclinganlage gewonnene Kohlendioxid unmittelbar der Plastifizierungseinheit zugeführt. Eine derartige unmittelbare Zuführung ist beispielsweise möglich, wenn die Plastifizierungseinheit und die Recyclinganlage räumlich gesehen nah beabstandet zueinander angeordnet sind, sodass das Kohlendioxid aus der Recyclinganlage beispielsweise über ein Rohrleitungssystem der Plastifizierungseinheit zuführbar ist. Alternativ, nicht erfindungsgemäß, ist natürlich auch eine Versorgung der Plastifizierungseinheit mittels Gasflaschen möglich.

In alternativer Ausgestaltung kann es jedoch auch vorgesehen sein, dass das in der Recyclinganlage gewonnene Kohlendioxid der Vorrichtung zur Reduktion von Kohlendioxid aus der Atmosphäre zugeführt wird. Dabei kann gegebenenfalls, je nach Menge des von der Recyclinganlage gewonnenen Kohlendioxids, zusätzlich aus der Umgebungsluft gewonnenes Kohlendioxid beigemischt bzw. ergänzt werden. Ein derartiges Verfahren hat darüber hinaus den Vorteil, dass von der Vorrichtung zur Reduktion von Kohlendioxid aus der Atmosphäre nicht nur eine Fertigungsanlage für Kunststoffteile mit dem Kohlendioxid versorgt und bedarfsgerecht Kohlendioxid bereitgestellt werden kann.

Darüber hinaus betrifft die Erfindung eine Anlage zur Herstellung von geschäumten Kunststoffteilen unter Verwendung von Kohlendioxid, wobei die Anlage vorzugsweise nach einem soweit beschriebenen, erfindungsgemäß ausgestalteten Verfahren arbeitet. Die Anlage umfasst eine Vorrichtung zur Reduktion von Kohlendioxid aus der Umgebungsluft unter Verwendung eines Adsorptionsmaterials und eine Plastifizierungseinheit zur Herstellung von geschäumten Kunststoffteilen, wobei die Plastifizierungseinheit zumindest mittelbar dazu ausgebildet ist, das in der Vorrichtung zur Reduktion von Kohlendioxid aus der Umgebungsluft gewonnene Kohlendioxid zu verwenden.

In Weiterbildung einer derartigen Anlage kann es vorgesehen sein, dass die Anlage zusätzlich eine Recyclinganlage zum Recycling von geschäumten Kunststoffteilen umfasst, die dazu ausgebildet ist, bei der Zerkleinerung der Kunststoffteile freigewordenes Kohlendioxid zumindest mittelbar der Plastifizierungseinheit zuzuführen.

Insbesondere kann es dabei vorgesehen sein, dass die Recyclinganlage dazu ausgebildet ist, das Kohlendioxid unmittelbar der Plastifizierungseinheit zuzuführen und/oder der Vorrichtung zur Reduktion von Kohlendioxid aus der Umgebungsluft.

Weitere Vorteile, Merkmale und Einzelheiten der Erfindung ergeben sich aus der nachfolgenden Beschreibung bevorzugter Ausführungsformen der Erfindung sowie anhand der Zeichnung.

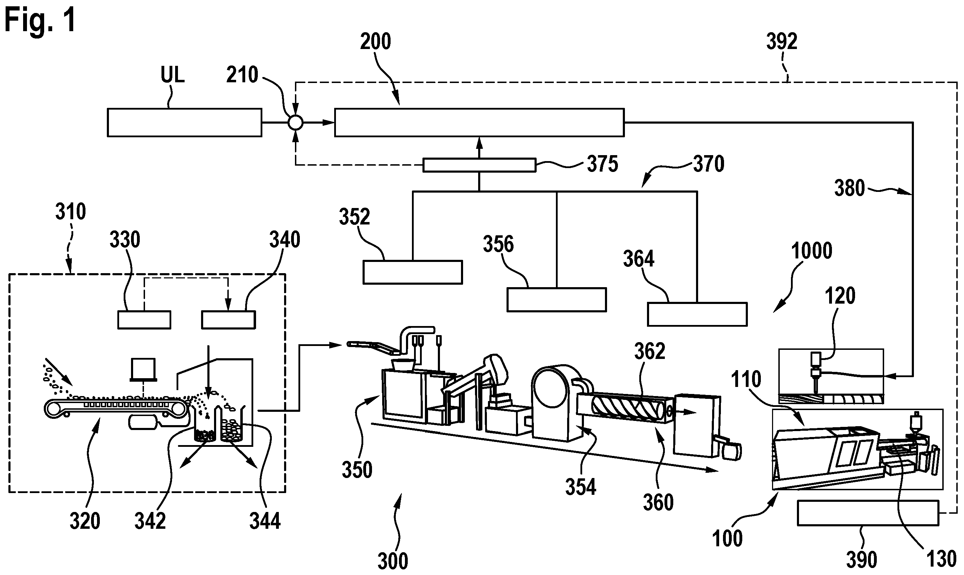

Kurze Beschreibung der Zeichnung
- Fig. 1: zeigt eine schematische Darstellung einer Anlage zur Herstellung von Kunststoffteilen im Zusammenhang mit einer Recyclinganlage und einer Anlage zur Reduktion von Kohlendioxid aus der Umgebungsluft.

### Ausführungsformen der Erfindung

In der Fig. 1 ist eine Anlage 1000 dargestellt, die im Wesentlichen aus drei Komponenten besteht. Die erste Komponente ist in Form einer Vorrichtung 100 zur Herstellung von im Einzelnen nicht dargestellten geschäumten Kunststoffteilen unter Verwendung von Kohlendioxid ausgebildet. Weiterhin umfasst die Anlage 1000 eine Vorrichtung 200, die dazu ausgebildet ist, Kohlendioxid aus der Umgebungsluft UL zu gewinnen. Dies erfolgt beispielsweise mittels eines riesel- bzw. schüttfähigen Adsorptionsmaterials. Zuletzt umfasst die Anlage 1000 eine Recyclinganlage 300 zum Recyceln von geschäumten Kunststoffteilen, wobei die Kunststoffteile sich dadurch auszeichnen, dass diese Kohlendioxid aufweisen bzw. enthalten.

Die soweit beschriebene Anlage 1000 ermöglicht einen geschlossenen Kreislauf von Kohlendioxid, d.h., dass aus der Umgebungsluft oder den recycelten Kunststoffteilen gewonnenes Kohlendioxid verwendet werden kann, um mittels der Vorrichtung 100 neue Kunststoffteile herzustellen.

Die Vorrichtung 100 ist in Form einer Spritzgießmaschine 110 ausgebildet, die beispielhaft eine Gasdosiereinheit 120 umfasst, die dazu dient, das Kohlendioxid in eine Kunststoffschmelze zu injizieren bzw. einzuleiten. Die Spritzgießmaschine 110 weist darüber hinaus eine Plastifizierungseinheit 130, zum Beispiel in Form eines Extruders auf, um die Kunststoffschmelze zu erzeugen, die nachfolgend zu den, durch das Kohlendioxid geschäumten Kunststoffteilen weiterverarbeitet wird. Eine derartige Spritzgießmaschine 110 ist aus dem Stand der Technik bekannt und deren Funktionsweise wird daher nicht näher erläutert.

Die Vorrichtung 200 zur Reduktion von Kohlendioxid aus der Umgebungsluft UL ist mit einer Ventileinrichtung 210 gekoppelt, die dazu dient, die Menge der in die Vorrichtung 200 eingebrachten Umgebungsluft UL zu steuern.

Die Recyclinganlage 300 umfasst eine Vorsortiereinrichtung 310 mit einem Förderband 320, auf das zu recycelndes Kunststoffmaterial aufgebracht wird. Mittels eines Sensors 330 ist es möglich, das Kunststoffmaterial auf die Anwesenheit von Kohlendioxid in den Kunststoffteilen zu prüfen. Hierzu kann es beispielsweise vorgesehen sein, dass die Kunststoffteile, welche unter Verwendung von Kohlendioxid hergestellt wurden, bei der Fertigung fluoreszierende Additive o.ä. enthalten, die beispielsweise mittels der Spritzgießmaschine 110 zusätzlich zum Kohlendioxid der Kunststoffschmelze beigefügt wurden. Der Sensor 330 kann eine Sortiereinheit, z.B. eine Luftdüse 340 ansteuern, um die Kunststoffteile in unterschiedliche Behälter 342, 344 einzusortieren. Während in dem Behälter 342 beispielsweise Kunststoffteile einsortiert sind, die kein Kohlendioxid enthalten, sind in dem Behälter 344 solche Kunststoffteile eingebracht, welche im Rahmen eines nachfolgenden Recyclingprozesses dazu dienen, das in ihnen enthaltene Kohlendioxid zu gewinnen und zur Fertigung neuer bzw. weiterer Kunststoffteile zu verwenden.

Die in dem Behälter 344 von der Vorsortiereinrichtung 310 gewonnenen Kunststoffteile werden anschließend zunächst einer Wascheinrichtung 350 der Recyclingeinrichtung 300 zugeführt, um die Kunststoffteile zu säubern. Die Wascheinrichtung 350 zeichnet sich durch eine im Einzelnen nicht dargestellte Absaugeinrichtung 352 aus, über die gegebenenfalls beim Waschvorgang freiwerdendes Kohlendioxid gesammelt werden kann. Anschließend werden die gewaschenen und zerkleinerten Kunststoffteile einer Trockeneinrichtung 354 zugeführt, welche unter Einwirkung von Wärme die Kunststoffteile trocknet. Auch hierbei findet eine Absaugeinrichtung 356 Anwendung, die gegebenenfalls freiwerdendes Kohlendioxid sammelt bzw. absaugt. Anschließend werden die Kunststoffteile einer Einrichtung 360 mit einem Extruder 362 zugeführt, der dazu dient, die gewaschenen und getrockneten Kunststoffteile aufzuschmelzen und zu Pellets zu verarbeiten, damit die so gewonnenen Pellets anschließend in der Spritzgießmaschine 110 verarbeitet werden können. Auch die Einrichtung 360 umfasst eine Absaugeinrichtung 364 zur Sammlung von Kohlendioxid.

Das in der Recyclinganlage 300 bei dem Recycling der Kunststoffteile mittels der Absaugeinrichtungen 352, 356 und 364 gewonnene Kohlendioxid wird anschließend beispielhaft mittels eines Rohrleitungssystems 370 der Vorrichtung 200 zugeführt, wobei in dem Rohrleitungssystem 370 eine Messeinrichtung 375 integriert ist, die den Massen- bzw. Volumenstrom des Kohlendioxids erfasst und einer nicht dargestellten Steuereinrichtung der Vorrichtung 200 als Eingangsgröße zuführt.

Das über das Rohrleitungssystem 370 der Vorrichtung 200 zugeführte Kohlendioxid wird von der Vorrichtung 200, ggf. zusammen mit aus der Umgebungsluft UL gewonnenem Kohlendioxid (Steuerung über die Ventileinrichtung 210) über ein weiteres Rohrleitungssystem 380 der Spritzgießmaschine 110 zugeführt. Eine Steuereinheit 390 der Spritzgießmaschine 110 meldet dabei den aktuellen Bedarf von Kohlendioxid zur Herstellung der Kunststoffteile über eine Steuerleitung 392 der Steuereinrichtung der Vorrichtung 200, welche durch eine entsprechende Ansteuerung der Ventileinrichtung 210 die benötigte Menge von Kohlendioxid bereitstellt.

Die soweit beschriebene Anlage 1000 kann in vielfältiger Art und Weise abgewandelt bzw. modifiziert werden. So ist es beispielsweise denkbar, nicht Erfindungsgemäß, das beim Recycling gewonnene Kohlendioxid nicht über Rohrleitungen bzw. das Rohrleitungssystem 370 an die Vorrichtung 200 zuzuführen, sondern direkt der Spritzgießmaschine 110 oder zusätzlich der Spritzgießmaschine 110. Auch ist es nicht erforderlich, eine Rohrleitung zum Transport des Kohlendioxids zu verwenden, vielmehr kann das Kohlendioxid auch wie an sich bekannt in Behältern in Form von Gasflaschen gespeichert werden, um der Vorrichtung 200 bzw. der Spritzgießmaschine 110 zugängig gemacht zu werden. In ähnlicher Weise ist es auch denkbar, das in der Vorrichtung 200 gewonnene Kohlendioxid nicht über das weitere Rohrleitungssystem 380 der Spritzgießmaschine 110 zuzuführen, sondern über Behälter bzw. Gasflaschen.

## Patentansprüche

1. Verfahren zur Herstellung von geschäumten Kunststoffteilen unter Verwendung von Kohlendioxid zum Schäumen einer Kunststoffschmelze, wobei das Kohlendioxid in die Kunststoffschmelze im Bereich einer Plastifizierungseinheit (130) eingeleitet wird, wobei das Kohlendioxid mittels einer Vorrichtung (200) zur Reduktion von Kohlendioxid aus der Umgebungsluft (UL) unter Verwendung eines Adsorptionsmaterials gewonnen wird, **dadurch gekennzeichnet,**
**dass** das Kohlendioxid über wenigstens eine Rohrleitung (380) der Plastifizierungseinheit (130) zugeführt wird, wobei die wenigstens eine Rohrleitung (380) die Vorrichtung (200) zur Reduktion von Kohlendioxid aus der Umgebungsluft (UL) mit der Plastifizierungseinheit (130) verbindet.

2. Verfahren nach Anspruch 1,
**dadurch gekennzeichnet,**
**dass** das in der Vorrichtung (200) zur Reduktion von Kohlendioxid aus der Umgebungsluft (UL) gewonnene Kohlendioxid in einem mobilen Speicher, insbesondere einer Gasflasche, bevorratet wird.

3. Verfahren nach einem der Ansprüche 1 oder 2,
**dadurch gekennzeichnet,**
**dass** im Bereich einer Recyclinganlage (300) für Kohlendioxid enthaltende, geschäumte Kunststoffteile bei deren Recycling freigewordenes Kohlendioxid zum Herstellen neuer geschäumter Kunststoffteile verwendet wird.

4. Verfahren nach Anspruch 3,
**dadurch gekennzeichnet,**
**dass** die Recyclinganlage (300) Absaugeinrichtungen (352, 356, 364) aufweist, um beim Herstellen der Kunststoffteile freiwerdendes Kohlendioxid abzusaugen.

5. Verfahren nach Anspruch 3 oder 4,
**dadurch gekennzeichnet,**
**dass** das in der Recyclinganlage (300) gewonnene Kohlendioxid unmittelbar der Plastifizierungseinheit (130) zugeführt wird.

6. Verfahren nach einem der Ansprüche 3 bis 5,
**dadurch gekennzeichnet,**
**dass** das in der Recyclinganlage (300) gewonnene Kohlendioxid der Vorrichtung (200) zur Reduktion von Kohlendioxid aus der Umgebungsluft zugeführt wird.

7. Anlage (1000) zur Herstellung von geschäumten Kunststoffteilen unter Verwendung von Kohlendioxid, vorzugsweise nach einem Verfahren nach einem der Ansprüche 1 bis 6, mit einer Vorrichtung (200) zur Reduktion von Kohlendioxid aus der Umgebungsluft (UL) unter Verwendung eines Adsorptionsmaterials und einer Plastifizierungseinheit (130) zur Herstellung von geschäumten Kunststoffteilen mittels Kohlendioxid, wobei die Plastifizierungseinheit (130) zumindest mittelbar dazu ausgebildet ist, das in der Vorrichtung (200) zur Reduktion von Kohlendioxid aus der Umgebungsluft (UL) gewonnene Kohlendioxid zu verwenden, **dadurch gekennzeichnet, dass** die Vorrichtung (200) zur Reduktion von Kohlendioxid aus der Umgebungsluft (UL) mit der Plastifizierungseinheit (130) über wenigstens eine Rohrleitung (380) verbunden ist, um ihr das Kohlendioxid zuzuführen.

8. Anlage nach Anspruch 7,
**dadurch gekennzeichnet,**
**dass** die Anlage (1000) zusätzlich eine Recyclinganlage (300) zum Recycling von Kohlendioxid enthaltenden, geschäumten Kunststoffteilen umfasst, die dazu ausgebildet ist, bei dem Recycling der Kunststoffteile freigewordenes Kohlendioxid zumindest mittelbar der Plastifizierungseinheit (130) zuzuführen.

9. Anlage nach Anspruch 8,
**dadurch gekennzeichnet,**
**dass** die Recyclinganlage (300) dazu ausgebildet ist, das Kohlendioxid unmittelbar der Plastifizierungseinheit (130) zuzuführen und/oder der Vorrichtung (200) zur Reduktion von Kohlendioxid aus der Umgebungsluft.

10. Verwendung einer Anlage nach einem der Ansprüche 6 bis 9 zur Herstellung von Kunststoffteilen gemäß einem der Ansprüche 1 bis 6.

## Claims

1. Method for producing foamed plastic parts using carbon dioxide for foaming a plastic melt, wherein the carbon dioxide is introduced into the plastic melt in the region of a plasticizing unit (130), wherein the carbon dioxide is obtained from the ambient air (UL) using an adsorption material by means of an apparatus (200) for reducing carbon dioxide, **characterized in that**
the carbon dioxide is supplied to the plasticizing unit (130) via at least one pipeline (380), wherein the at least one pipeline (380) connects the apparatus (200) for reducing carbon dioxide from the ambient air (UL) to the plasticizing unit (130).

2. Method according to Claim 1,
**characterized in that**
the carbon dioxide obtained from the ambient air (UL) in the apparatus (200) for reducing carbon dioxide is stored in a mobile store, in particular a gas bottle.

3. Method according to one of Claims 1 and 2,
**characterized in that**
in the region of a recycling plant (300) for carbon dioxide-containing, foamed plastic parts, carbon dioxide released during the recycling thereof is used to produce new foamed plastic parts.

4. Method according to Claim 3,
**characterized in that**
the recycling plant (300) has suction-extraction devices (352, 356, 364) in order to extract by suction carbon dioxide released during the production of the plastic parts.

5. Method according to Claim 3 or 4,
**characterized in that**
the carbon dioxide obtained in the recycling plant (300) is fed directly to the plasticizing unit (130).

6. Method according to one of Claims 3 to 5,
**characterized in that**
the carbon dioxide obtained in the recycling plant (300) is fed to the apparatus (200) for reducing carbon dioxide from the ambient air.

7. Plant (1000) for producing foamed plastics parts using carbon dioxide, preferably by a method according to one of Claims 1 to 6, having an apparatus (200) for reducing carbon dioxide from the ambient air (UL) using an adsorption material and a plasticizing unit (130) for producing foamed plastic parts by means of carbon dioxide, wherein the plasticizing unit (130) is at least indirectly designed to use the carbon dioxide obtained from the ambient air (UL) in the apparatus (200) for reducing carbon dioxide, **characterized in that in that** the apparatus (200) for reducing carbon dioxide from the ambient air (UL) is connected to the plasticizing unit (130) via at least one pipeline (380) in order to supply the carbon dioxide to the plasticizing unit.

8. Plant according to Claim 7,
**characterized in that**
the plant (1000) additionally comprises a recycling plant (300) for recycling carbon dioxide-containing, foamed plastic parts, which is designed to feed carbon dioxide released during the recycling of the plastic parts at least indirectly to the plasticizing unit (130).

9. Plant according to Claim 8,
**characterized in that**
the recycling plant (300) is designed to feed the carbon dioxide directly to the plasticizing unit (130) and/or to the apparatus (200) for reducing carbon dioxide from the ambient air.

10. Use of a plant according to one of Claims 6 to 9 for producing plastic parts according to one of Claims 1 to 6.

## Revendications

1. Procédé de fabrication de pièces en matière plastique expansée utilisant du dioxyde de carbone pour faire mousser une matière plastique fondue, dans lequel le dioxyde de carbone est introduit dans la matière plastique fondue dans la zone d'une unité de plastification (130), dans lequel le dioxyde de carbone est obtenu au moyen d'un dispositif (200) de réduction du dioxyde de carbone de l'air ambiant (UL) utilisant un matériau d'adsorption, **caractérisé en ce que**
le dioxyde de carbone est acheminé vers l'unité de plastification (130) par l'intermédiaire d'au moins une conduite (380), dans lequel l'au moins une conduite (380) relie le dispositif (200) de réduction du dioxyde de carbone de l'air ambiant (UL) à l'unité de plastification (130).

2. Procédé selon la revendication 1,
**caractérisé en ce**
**que** le dioxyde de carbone obtenu dans le dispositif (200) de réduction du dioxyde de carbone de l'air ambiant (UL) est stocké dans un réservoir mobile, en particulier une bouteille de gaz.

3. Procédé selon l'une des revendications 1 ou 2,
**caractérisé en ce**
**que** le dioxyde de carbone libéré lors du recyclage de pièces en matière plastique expansée contenant du dioxyde de carbone dans la zone d'une installation de recyclage (300) est utilisé pour fabriquer de nouvelles pièces en matière plastique expansée.

4. Procédé selon la revendication 3,
**caractérisé en ce**
**que** l'installation de recyclage (300) comporte des dispositifs d'aspiration (352, 356, 364) pour aspirer le dioxyde de carbone libéré lors de la fabrication des pièces en matière plastique.

5. Procédé selon la revendication 3 ou 4,
**caractérisé en ce**
**que** le dioxyde de carbone obtenu dans l'installation de recyclage (300) est acheminé directement vers l'unité de plastification (130).

6. Procédé selon l'une des revendications 3 à 5,
**caractérisé en ce**
**que** le dioxyde de carbone obtenu dans l'installation de recyclage (300) est acheminé vers le dispositif (200) de réduction du dioxyde de carbone de l'air ambiant.

7. Installation (1000) de fabrication de pièces en matière plastique expansée utilisant du dioxyde de carbone, de préférence selon un procédé selon l'une des revendications 1 à 6, comprenant un dispositif (200) de réduction du dioxyde de carbone de l'air ambiant (UL) utilisant un matériau d'adsorption et une unité de plastification (130) pour fabriquer des pièces en matière plastique expansée au moyen de dioxyde de carbone, dans laquelle l'unité de plastification (130) est conçue, au moins indirectement, pour utiliser le dioxyde de carbone obtenu dans le dispositif (200) de réduction du dioxyde de carbone de l'air ambiant (UL), **caractérisée en ce que** le dispositif (200) de réduction du dioxyde de carbone de l'air ambiant (UL) est relié à l'unité de plastification (130) par l'intermédiaire d'au moins une conduite (380) pour lui acheminer le dioxyde de carbone.

8. Installation selon la revendication 7,
**caractérisée en ce**
**que** l'installation (1000) comprend en outre une installation de recyclage (300) pour recycler des pièces en matière plastique expansée contenant du dioxyde de carbone, qui est conçue pour acheminer, au moins indirectement, vers l'unité de plastification (130) le dioxyde de carbone libéré lors du recyclage des pièces en matière plastique.

9. Installation selon la revendication 8,
**caractérisée en ce**
**que** l'installation de recyclage (300) est conçue pour acheminer le dioxyde de carbone directement vers l'unité de plastification (130) et/ou vers le dispositif (200) de réduction du dioxyde de carbone de l'air ambiant.

10. Utilisation d'une installation selon l'une des revendications 6 à 9 pour fabriquer des pièces en matière plastique selon l'une des revendications 1 à 6.
